# EUROPEAN PATENT APPLICATION

(11) **EP 3 422 196 A1**
(43) Date of publication of application: **02.01.2019**
(21) Application number: 17178796.3
(22) Date of filing: 29.06.2017
(51) Int. Cl.: G06F 13/40

(54) **PORT TERMINATION**

(71) Applicant: Vestel Elektronik Sanayi ve Ticaret A.S., 45030 Manisa (TR)
(72) Inventor: ER, Alper Sait, 45030 Manisa (TR); YILDIZ, Kadir, 45030 Manisa (TR)
(74) Representative: Flint, Adam

(57) **Abstract**

A port connection module is provided for terminating processor ports which are connectable to external ports (2, 3), in which the external port connectors are capable of connection to peripheral devices (20). The port connection module has a detection circuit operable to detect a state of each of the external port connectors (2, 3) to which the processor ports are connectable. A use state is indicated if the external port connector (2, 3) is connected to a peripheral device (20), and a non-use state is indicated if the external port connector (2, 3) is not connected to a peripheral device (20). A switching circuit (9) is controllable to connect each processor port (10a, 11a) to one of : (i) an external port connector (2, 3) in a use state and (ii) a termination circuit (14, 15) in place of an external port connector (2, 3) in a non-use state.

## Description

### Technical Field

The present disclosure relates to port termination in electronic devices.

### Background

Electromagnetic compatibility (EMC) testing is used to ensure that electrical and electronic devices do not emit overly large amounts of electromagnetic interference in the form of radiated and conducted emissions. So-called 'EMC testing' is widely used and has a number of different testing approaches. When all of the tests have been passed, a manufacturer receives approval for the tested device. One of the tests is an EMC radiated emissions (RE) test. This test measures the electromagnetic emission level of the device under test. Other EMC tests serve the purpose of confirming that the device continues to function in the presence of various electromagnetic phenomena. Many electronic devices (for example media appliances such as televisions, or computers etc.) have multiple ports. When carrying out the EMC testing, the possibility that a user may use the device in different port connection scenarios is taken into account when testing the device with multiple ports.

Ports can include such ports as High Definition Multimedia Interface (HDMI), Video Graphics Adaptor (VGA), Universal Serial Bus (USB), etc. However, a problem can arise when a user does not use an electronic device, which was subject to EMC tests, in accordance with the scenarios which have been tested. A device used in such a way, even when it had passed the tests, could generate unwanted electromagnetic radiation, or be subject to interference from some other electromagnetic phenomenon. Either way, EMC problems can arise from use of the device which has otherwise passed a test.

### Summary

The inventors have realised that there is one particular scenario where this might arise. When conducting a radiated emissions (RE) test, there are procedures which involve terminating the ports of the device under test. In this context, terminating means that the electronic lines of the port interface are connected to a resistor. Connecting the port lines to a resister is referred to as terminating the lines. Tests can be done by terminating the input/output port lines of the device in a number of different scenarios. However, because of these scenarios, tests are applied when all of the input/output ports of the devices are terminated and after all the tests, the device will be approved. However, when a user uses the device, all ports may not in fact be terminated. So a user may end up using the device in a manner that does not comply with the standards for which it has been tested. For example, unused ports can be exposed to electromagnetic radiation, or can allow radiation to be emitted.

According to an aspect of the disclosure there is provided a port connection module for terminating processor ports which are connectable to external port connectors, the external port connectors capable of connection to peripheral devices, the port connection module comprising:
a detection circuit operable to detect a state of each of the external port connectors to which the processor ports are connectable, wherein a use state is indicated if the external port connector is connected to a peripheral device, and a non-use state is indicated if the external port connector is not connected to a peripheral device; and
a switching circuit controllable to connect each processor port connector to one of (i) an external port connector indicated to be in a use state and (ii) a termination circuit in place of an external port connector indicated to be in a non-use state.

The switching circuit can be operable to receive switch command data generated by
the processor responsive to indications of the use and non-use states.

The port connection module may comprise a serial to parallel converter (e.g. a shift register) for receiving switch command data in a serial form and converting it to a parallel form for controlling the switching circuit.

The switching circuit can comprise a plurality of switches, each switch controllable by a respective signal of the parallel data, and having a first switching terminal connected to a termination circuit and a second switching terminal connected to an external port connector, wherein the data selects the first or second switching terminal for connection to the processor port.

Another aspect of the disclosure provides a port connection module as defined above and a plurality of termination circuits, each termination circuit being capable of replacing one of the external port connectors. Where processor ports are of different types each termination circuit is of a type matching the port to which it can be connected.

Another aspect of the disclosure provides an electronic device comprising:
a processor having multiple processor ports connectable to respective external port connectors which are capable of connecting to peripheral devices;
detection means operable to detect a state of each of the external port connectors, wherein a use state is indicated if the external port connector is connected to a peripheral device and a non-use state is indicated if the external port connector is not connected to a peripheral device; and
a switching circuit controllable by the processor to connect each processor port to one of (i) an external port connector indicated to be in the use state and (ii) a termination circuit in place of an external port connector indicated to be in a non-use state.

The processor can be operable to generate switch command data responsive to indications received from the detection means, the switch command data controlling the switching circuit.

Another aspect of the disclosure provides use of an electronic device in which some processor ports are connected to an external port connector and other processor ports have been automatically connected to a termination circuit, and wherein no processor ports are unconnected.

Another aspect of the disclosure provides a method of terminating processor ports in an electronic device, the method comprising:
detecting a state of each of multiple external port connectors connectable to the processor ports, wherein a use state is indicated if the external port connector is connected to a peripheral device and a non-use state is indicated if the external port connector is not connected to a peripheral device; and
controlling a switching circuit to connect each processor port to one of (i) an external port connector indicated to be in the use state and (ii) a termination circuit in place of an external port connector indicated to be in a non-use state, whereby all processor ports are connected either to an external port or a termination circuit.

The step of controlling the switching circuit can be carried out automatically by the processor responsive to the indications from the detecting step.

For a better understanding of the present invention and to show how the same may be carried into effect reference will now be made by way of example to the accompanying drawings.

### Brief Description of the Figures

Figure 1 is a schematic block diagram of an electronic device with a port connection module;
Figure 2 is a schematic block diagram of the electronic device in one use case and;
Figure 3 is a schematic flowchart of a method of terminating computer ports.

### Detailed Description

In recognition of the above-mentioned problem with the scenarios used in EMC testing not matching all possible use cases, the inventors have provided herewith a solution in which unused ports are terminated automatically during normal use of the device to prevent EMC problems being caused by an already tested device. While in principle it would be possible to terminate unused ports manually when the device is in use, terminating the ports of the device manually is not an efficient solution, and users might overlook to do it. Terminating the ports manually is time-consuming and requires user effort. To avoid the need for the user to terminate the ports manually, the port connection module described herein causes the electronic device's unused I-O ports to be terminated automatically. All I-O ports, except used ones, are terminated by switching them to termination circuits.

Computer ports can be configured as I-O (input/output) ports. Input signals pass from an external port connector to an internal processor port; output signals pass from the internal processor port to an external port connector. The term 'port' is sometimes used to denote an internal processor port (the lines which directly connect to an internal processor) and sometimes an external port connector, which is connected to the internal processor port lines by a connection line and which can be connected to an external peripheral. In the present disclosure, a 'port' denotes an internal processor port (the electronic lines) and an external port connector denotes a connector which is provided to connect the port to an external peripheral.

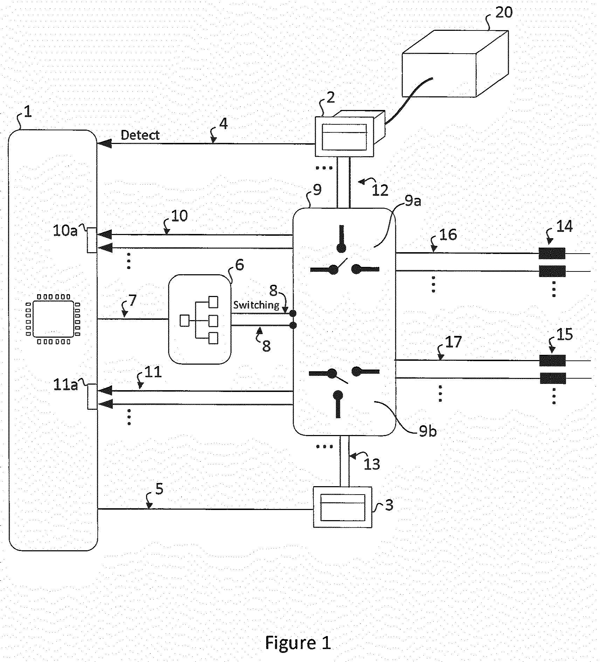

Figure 1 is a schematic diagram of an electronic device with a port connection module which enables automated port termination. The electronic device may be of many types, including for example a television set, a DVD player, a set-top box, a personal computer, an audio amplifier, au audio processor, including for example a surround sound audio processor/ amplifier, a games console, etc. It could be connected, via external port connectors, to peripherals which could also take the form of any of these devices.

The electronic device comprises a processor 1 which has respective sets of port lines 10, 11 which are connectable to external port connectors 2, 3 respectively. Each processor port interface is denoted 10a, 11a respectively, to which the port lines connect. Each external port connector 2, 3 can itself be connected to a peripheral device 20, an example of which is shown connected to the input connector 2. When an external port is connected to a peripheral device, it is said to be in a 'use state', such as port 2. When it is not connected to a peripheral device, it is said to be in a 'non-use' state, such as port 3.

The device of Figure 1 includes detection pins 4, 5 connected to the respective external port connector 2, 3. These detection pins determine whether or not the external port connector is in a use state or a non-use state. This can be achieved by checking for a 'live' voltage or current signal at the external port connector, denoting its connection to an active device. The detection pins are connected to the processor 1 which can detect their state. The processor 1 has processing logic which receives the indications on the detection pins 4, 5 indicating the state of the external port connectors to which they are coupled.

The processor 1 is also connected to a serial communication line 7 which provides serial command data to a serial to parallel converter 6. The serial to parallel converter 6 provides parallel outputs along respective parallel lines 8 to a switch circuit 9. Each line 8 controls a respective switches 9a and 9b in the switch circuit 9. Two switches are shown , but it will be appreciated that any number could be utilised, corresponding to the number of ports. This is shown entirely diagrammatically only in Figure 1, because it will readily be understood that the switch circuit 9 could take any convenient form and may include transistor circuits or an integrated circuit. The switch circuit 9 is capable of controlling the connections responsive to the outputs 8. The switch circuit 9 is capable of connecting the port lines 10, 11 to their respective external port connectors 2, 3 via the input port connector lines 12, 13. However, the switching circuit 9 is also capable of being controlled to connect the input port lines 10, 11 to terminating circuit lines 16, 17, each of which ends in a terminating circuit 14, 15 respectively. Each terminating circuit 14, 15 can take the form of resistors or any other suitable terminator.

The port detection module operates in such a way that the switching circuit 9 connects the processor I-O port lines to the terminating circuit when the port is unused (as detected from the corresponding port connector), or connects the processor I-O port lines to the port connector when the port is in use. Each terminating circuit can be configured in dependence on the external port connector that it 'replaces', based on the processor port type. The terminating circuit can include related resistors for input port such as, for example, 50 Ω for an HDMI port or 75 Ω for a VGA port. Other resistor values may be appropriate for these or other kinds of port, as in the case of EMC testing.

When the device is in use, the processor 1 checks for signals on detection pins 4, 5 and from that it determines which ports are used. For example, a user might connect an HDMI port of a media device to a player device 20 (e.g. a DVD player) to watch something, and might leave the other port (e.g. a VGA port) unused. If there are unterminated ports, the processor decides to terminate these ports and sends related serial command data to the serial to parallel converter 6 via the serial communication line 7. The serial to parallel converter converts the serial data to parallel data and outputs this along the data outputs 8 to the switching circuit 9 to control the respective switching circuits.

The serial to parallel converter can take the form of a shift register which receives serial data from the processor 1 and converts it to parallel data.

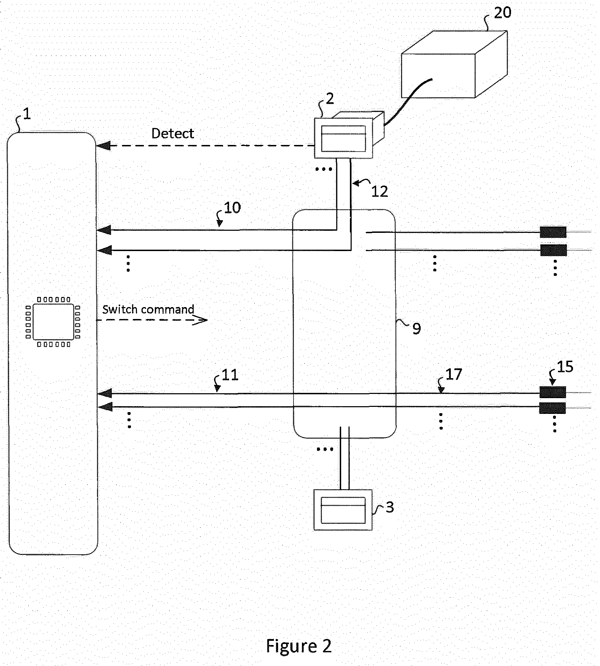

Figure 2 is a schematic diagram illustrating the connections which have been made in a scenario where the external port connector 2 is in a use state (connected to a peripheral device such as a player device) and the external port connector 3 is in a non-use state (that is, not connected to any peripheral device). As can readily be seen from Figure 2, the input port line 10 is connected to the port line 12, whereas the input port line 11 is connected to the termination circuit 15 via the termination line 17. Note that components of the electronic device which are shown in Figure 1 are omitted from Figure 2 for reasons of clarity.

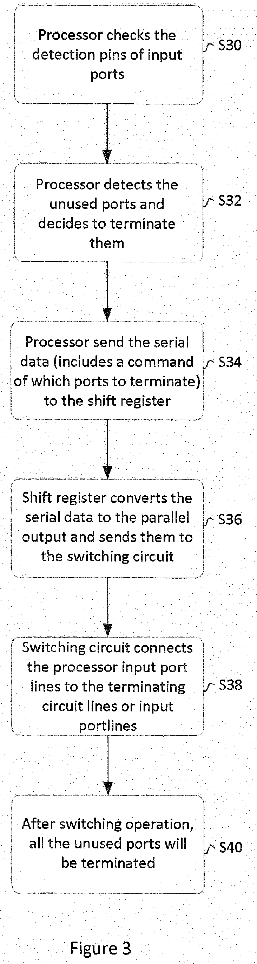

Figure 3 is a schematic flow chart showing operation of the port connection module. At step S30 the processor 1 checks the detection pins 4, 5 of the input ports 2, 3. At step S32, the processor might detect unused ports (for example VGA port 3) and if so it makes a decision to terminate them. At step S34 the processor sends serial data (including a command of which ports to terminate) to the shift register 6. At step S36 the shift register receives the serial data and converts it to a parallel data outputs 8 for transmission to the switching circuit 9. The switching circuit 9 connects the processor input port lines to the terminating circuit lines or input port lines based on the parallel data, at step S38. In this way, following a command from the processor, unused ports will be terminated in an automated fashion. By terminating the unused ports automatically, EMC problems are prevented. In particular, when a user uses the device, he is using it in the same scenario that the device was passed when the EMC RE test was carried out. Thus, at step S40 all the unused ports are terminated, and all the used ports have a peripheral device connected to them.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A port connection module for terminating processor ports which are connectable to external ports, the external port connectors capable of connection to peripheral devices, the port connection module comprising:
a detection circuit operable to detect a state of each of the external port connectors to which the processor ports are connectable, wherein a use state is indicated if the external port connector is connected to a peripheral device, and a non-use state is indicated if the external port connector is not connected to a peripheral device; and
a switching circuit controllable to connect each processor port to one of (i) an external port connector in a use state and (ii) a termination circuit in place of an external port connector in a non-use state.

2. A port connection module according to claim 1, wherein the switching circuit is operable to receive switch command data generated by the processor responsive to indications of the use and non-use states.

3. A port connection module according to claim 1 or 2, comprising a serial to parallel converter for receiving switch command data in a serial form and converting it to a parallel form for controlling the switching circuit.

4. A port connection module according to claim 3, wherein the switching circuit comprises a plurality of switches, each switch controllable by a respective signal of the parallel data, and having a first switching terminal connected to a terminal circuit and second switching terminal connected to an external port connector, wherein the data selects the first or second switching terminal for connection to the processor port.

5. A port connection circuit comprising a port connection module according to any preceding claim and a plurality of termination circuits, each termination circuit being capable of replacing one of the external port connectors.

6. A port connection circuit according to claim 5, wherein the processor ports are of different types and wherein, each termination circuit is of a type matching the port to which it can be connected by the switching circuit.

7. An electronic device comprising:
a processor having multiple processor ports connectable respective external port connectors which are capable of connecting to peripheral devices;
detection means operable to detect a state of each of the external port connectors, wherein a use state is indicated if the external port connector is connected to a peripheral device and a non-use state is indicated if the external port connector is not connected to a peripheral device; and
a switching circuit controllable by the processor to connect each processor port to one of (i) an external port connector indicated to be in a use state and (ii) a termination circuit of an external port connector indicated to be in a non-use state.

8. An electronic device according to claim 7, in which all of the processor ports are connected either to an external port connector or to a termination circuit, and wherein no processor ports are unconnected.

9. An electronic device according to claim 7 or 8, comprising a media appliance or a computer.

10. An electronic device according to claim 7, 8 or 9, wherein the processor ports comprise one or more of HDMI, USB and VGA ports.

11. Use of an electronic device according to any of claims 7 to 10 in which all of the processor ports are connected either to an external port connector or to a termination circuit, and wherein no processor ports are unconnected.

12. A method of terminating processor ports in an electronic device, the method comprising:
detecting a state of each of multiple external port connectors connectable to the processor ports, wherein a use state is indicated if the external port connector is connected to a peripheral device and a non-use state is indicated if the external port connector is not connected to a peripheral device; and
controlling a switching circuit to connect each processor port to one of (i) an external port connector to be in the use state and (ii) a termination circuit in place of an external port connector indicated to be in a non-use state, whereby all processor ports are connected either to an external port or a termination circuit.

13. A method according to claim 12, wherein the step of controlling the switching circuit is carried out automatically by the processor responsive to the indications from the detecting step.
